# EUROPEAN PATENT APPLICATION

(11) **EP 4 525 098 A1**
(43) Date of publication of application: **19.03.2025**
(21) Application number: 23917185.3
(22) Date of filing: 16.11.2023
(51) Int. Cl.: H01M 4/66

(54) **CURRENT COLLECTOR AND PREPARATION METHOD THEREFOR, SECONDARY BATTERY, BATTERY MODULE, AND ELECTRICAL DEVICE**

(30) Priority: 17.01.2023 CN 202310077058
(71) Applicant: Contemporary Amperex Technology (Hong Kong) Limited, Hong Kong (HK)
(72) Inventor: CHEN, Shigang, Ningde, Fujian 352100 (CN); GUO, Bingkun, Ningde, Fujian 352100 (CN); ZHANG, Xinxin, Ningde, Fujian 352100 (CN); LIU, Ben, Ningde, Fujian 352100 (CN); LI, Xiaolong, Ningde, Fujian 352100 (CN)
(74) Representative: Ziebig Hengelhaupt Intellectual Property Attorneys Patentanwaltskanzlei PartGmbB
(86) International application number: PCT/CN2023/132072
(87) International publication number: WO 2024/152717

(57) **Abstract**

This application provides a current collector and a preparation method thereof, a secondary battery, a battery module, a battery pack, and an electric apparatus. The current collector includes a metal substrate and a surface treatment layer formed on at least one side of the metal substrate, where the surface treatment layer includes oxide and/or nitride of the metal substrate. The surface treatment layer can protect the metal from corrosion by anions in the electrolyte solution or optimize the metal nucleation behavior, improve the coulombic efficiency and cycle capacity retention rate of the battery, and improve the storage performance of the battery.

## Description

### TECHNICAL FIELD

This application relates to the field of secondary battery technologies, and in particular, to a current collector and a preparation method thereof, a secondary battery, a battery module, a battery pack, and an electric apparatus.

### BACKGROUND

In recent years, secondary batteries have been widely used in energy storage power supply systems such as hydroelectric, thermal, wind, and solar power plants, and many other fields including electric tools, electric bicycles, electric motorcycles, electric vehicles, military equipment, and aerospace.

During the charge and discharge cycle of secondary batteries, components in the electrolyte solution can corrode the electrode materials, causing side reactions, which deteriorate the cycle life, storage performance, and safety of the battery.

### SUMMARY

This application was made in view of the preceding issues and aims to provide a current collector. The current collector includes a metal substrate and a surface treatment layer formed on at least one side of the metal substrate, where the surface treatment layer includes oxide and/or nitride of the metal substrate. The surface treatment layer of the current collector can protect the metal from corrosion by anions in the electrolyte solution, enhance tolerance under high voltage, effectively improve the coulombic efficiency and cycle capacity retention rate of the battery, and improve the storage performance of the battery.

A first aspect of this application provides a current collector for sodium secondary battery. The current collector includes a metal substrate and a surface treatment layer formed on at least one side of the metal substrate, where the surface treatment layer includes oxide and/or nitride of the metal substrate.

In any embodiment, the surface treatment layer has a thickness of 2 nm to 200 nm, and optionally 5 nm to 50 nm.

Controlling the thickness of the surface treatment layer to 2 nm to 200 nm can protect the current collector from corrosion by anions in the electrolyte solution and enhance the tolerance of the current collector under high voltage while ensuring that the electronic conductivity of the current collector is not affected, thereby improving the coulombic efficiency and cycle capacity retention rate of the battery. Additionally, controlling the thickness of the surface treatment layer to 2 nm to 200 nm can prevent excessive thickness that would lead to increased internal resistance and decreased cycling performance and decreased energy density of the battery. Controlling the thickness of the surface treatment layer to 5 nm to 50 nm is favorable for further improving the coulombic efficiency and cycle capacity retention rate of the battery.

In any embodiment, the surface treatment layer includes one or more of aluminum oxide, titanium oxide, copper oxide, nickel oxide, and titanium nitride.

The surface treatment layer including one or more of aluminum oxide, titanium oxide, copper oxide, nickel oxide, and titanium nitride can protect the current collector from corrosion by anions in the electrolyte solution and enhance the tolerance of the current collector under high voltage, without affecting the electronic conductivity of the current collector.

In any embodiment, the surface treatment layer is obtained through heat treament performed on the metal substrate, and the metal substrate includes at least one of aluminum, nickel, copper, and titanium.

The heat treatment process is simple and low-cost, and the surface treatment layer can be effectively regulated in the way of controlling the heat treatment, which is suitable for large-scale popularization and application. Performing heat treatment on the metal substrate of the current collector to form a surface treatment layer on the current collector can protect the collector from anion corrosion in the electrolyte solution and enhance the tolerance of the current collector under high voltage without affecting the electronic conductivity of the current collector, avoid or mitigate reactions between the electrolyte solution and metal ions, and improve the coulombic efficiency and cycle life of the battery.

In any embodiment, the surface treatment layer has a thickness of 100 nm to 3000 nm, and optionally 500 nm to 1000 nm.

In any embodiment, the surface treatment layer includes copper oxide nanoneedles, where the copper oxide nanoneedles are substantially perpendicular to a surface of the metal substrate, and optionally, the nanoneedles have a length of 0.1 microns to 3 microns, and the nanoneedles have a width of 30 nm to 200 nm.

The current collector containing copper oxide nanoneedles may be served as a negative electrode, and the copper oxide nanoneedles on the surface of the current collector can provide more sufficient nucleation sites and effectively reduce local current density, which promotes more uniform deposition of metal ions on the surface of the current collector, helps inhibit the formation of metal dendrites and improves the coulombic efficiency and cycle capacity retention rate of the battery.

In any embodiment, the surface treatment layer is obtained through chemical treatment performed on the metal substrate, and the metal substrate includes copper.

In any embodiment, the surface treatment layer has a surface density of 0.1 g/m² to 20 g/m².

Controlling the surface density of the surface treatment layer to 0.1 g/m² to 20 g/m² can protect the metal from anion corrosion in the electrolyte solution while ensuring that the conductivity of the current collector is not too low, thereby improving the tolerance of the current collector under high voltage and optimizing the coulombic efficiency and cycle capacity retention rate of the battery.

In any embodiment, the foil metal substrate has a thickness of 5 µm to 500 µm, and optionally 10 µm to 80 µm, and the foam metal substrate has a porosity of higher than 90%.

When the foil metal substrate has a thickness of 5 µm to 500 µm and the foam metal substrate has a porosity of higher than 90%, it can ensure that the current collector has good conductivity, high mechanical strength, and low internal resistance, which is favorable for the stability and safety of the battery.

In any embodiment, the current collector has a conductivity of not less than 0.1 S/cm.

When the conductivity of the current collector is not less than 0.1 S/cm, it can ensure good conductivity of the current collector, promote electron transfer between components of the battery, and improve the specific capacity and rate performance of the battery.

A second aspect of this application provides a current collector preparation method, including the following steps: performing heat treatment and/or chemical treatment on a metal substrate to form a surface treatment layer on at least one side of the metal substrate.

Using the above heat treatment method to form a surface treatment layer on at least one side of the metal substrate can protect the current collector from corrosion by anions in the electrolyte solution and enhance the tolerance of the current collector under high voltage without affecting the electronic conductivity of the current collector, avoid or mitigate reactions between the electrolyte solution and metal ions, and improve the coulombic efficiency and cycle life of the battery. Moreover, the heat treatment process is simple and suitable for large-scale popularization and application.

In any embodiment, the metal substrate is aluminum, the heat treatment is performed in an atmosphere of air or oxygen, the heat treatment is performed at 80°C to 350°C, and optionally 160°C to 280°C, the heat treatment is performed for 2 min to 120 min, and optionally 5 min to 30 min, and the surface treatment layer includes aluminum oxide.

In any embodiment, the metal substrate is titanium, the heat treatment is performed in an atmosphere of air or oxygen, the heat treatment is performed at 200°C to 500°C, and optionally 300°C to 500°C, the heat treatment is performed for 2 min to 120 min, and optionally 5 min to 30 min, and the surface treatment layer includes titanium oxide.

In any embodiment, the metal substrate is copper, the heat treatment is performed in an atmosphere of air or oxygen, the heat treatment is performed at 200°C to 500°C, and optionally 200°C to 400°C, the heat treatment is performed for 2 min to 120 min, and optionally 5 min to 30 min, and the surface treatment layer includes copper oxide.

In any embodiment, the metal substrate is nickel, the heat treatment is performed in an atmosphere of air or oxygen, the heat treatment is performed at 80°C to 450°C, and optionally 180°C to 300°C, the heat treatment is performed for 2 min to 120 min, and optionally 5 min to 30 min, and the surface treatment layer includes nickel oxide.

In any embodiment, the metal substrate is titanium, the heat treatment is performed in an atmosphere of nitrogen, a gas flow rate is 10 mL/min to 200 mL/min, and optionally 20 mL/min to 80 mL/min, the heat treatment is performed at 500°C to 800°C, and optionally 650°C to 800°C, the heat treatment is performed for 2 min to 120 min, and optionally 5 min to 30 min, and the surface treatment layer includes titanium nitride.

By simply controlling process parameters, the composition and morphology of the surface treatment layer can be adjusted to match different positive/negative electrode active materials and achieve battery structure design and performance optimization. In any embodiment, the preparation method is specifically: after performing heat treatment on the metal substrate, performing post-treatment in a different atmosphere to form a surface treatment layer on at least one side of the metal substrate.

In any embodiment, the metal substrate is titanium, the heat treatment is performed in an atmosphere of air or oxygen, the heat treatment is performed at 200°C to 500°C, and the heat treatment is performed for 2 min to 120 min; the post-treatment is performed in an atmosphere of nitrogen, the post-treatment is performed at 600°C to 900°C, and the post-treatment time is performed for 2 min to 120 min; and the surface treatment layer includes titanium oxide and titanium nitride.

By performing nitridation after oxidation, a heterogeneous structure of titanium oxide and titanium nitride can be formed on the surface of the titanium foil, further enhancing the stability of the current collector. This heterogeneous structure also improves the affinity of the current collector for metal ions, enhances the surface diffusion kinetics of metal ions, reduces the nucleation overpotential of metal ions, guides the uniform and regular deposition of metal ions, further improves the coulombic efficiency and cycle capacity retention rate of the battery, and enhances the storage stability of the battery.

In any embodiment, the preparation method is specifically: preforming chemical treatment on the metal substrate in an alkaline solution to form a surface treatment layer on at least one side of the metal substrate.

In any embodiment, the metal substrate is copper, and the surface treatment layer includes copper oxide nanoneedles; where the alkaline solution has a pH value of 11 to 12, the chemical treatment is performed at 45°C to 90°C, and the chemical treatment is performed for 0.5 h to 12 h.

Using a simple alkaline solution to soak the copper current collector can form a layer of copper oxide nanoneedles on the surface of the copper current collector, which increases the deposition sites and active area of the current collector, facilitates the diffusion of metal ions at the electrode/electrolyte solution interface, reduces the nucleation overpotential and local current density, and guides the uniform deposition of metal ions. This also further improves production efficiency while improving performance and significantly reduces preparation costs and energy consumption.

A third aspect of this application provides a secondary battery, including a positive electrode plate and a negative electrode plate, where the positive electrode plate and/or negative electrode plate includes the current collector according to any one of the foregoing embodiments or a current collector prepared using the preparation method according to any one of the foregoing embodiments.

The secondary battery has excellent cycling performance.

In any embodiment, the secondary battery is a sodium battery.

In any embodiment, the secondary battery is a sodium secondary battery with no negative electrode. The sodium secondary battery with no negative electrode may have a high energy density.

In any embodiment, the positive electrode plate includes a positive electrode active material, and the positive electrode active material includes one or more of Prussian blue compound, polyanionic compound, and layered oxide.

In any embodiment, a surface of particles of the positive electrode active material is provided with an enveloping layer, where the enveloping layer includes one or more of carbon material, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride.

In any embodiment of this application, the enveloping layer has a thickness of 2 nm to 1000 nm.

The enveloping layer with an appropriate thickness can effectively improve performance and prevent the resistance of the positive electrode film from being too high due to the enveloping layer being too thick, which may lead to a decrease in battery performance.

A fourth aspect of this application provides a battery module, including the secondary battery according to the third aspect of this application.

A fifth aspect of this application provides to a battery pack, including the secondary battery according to the third aspect of this application or the battery module according to the fourth aspect of this application.

A sixth aspect of this application provides an electric apparatus, including at least one of the secondary battery according to the third aspect of this application, the battery module according to the fourth aspect of this application, or the battery pack according to the fifth aspect of this application.

### BRIEF DESCRIPTION OF DRAWINGS

FIG. 1 is a schematic diagram of a secondary battery according to an embodiment of this application;
FIG. 2 is an exploded view of the secondary battery according to the embodiment of this application in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application shown in FIG. 4; and
FIG. 6 is a schematic diagram of an electric apparatus using a secondary battery as a power source according to an embodiment of this application.

### Description of reference signs:

1. battery pack; 2. upper box body; 3. lower box body; 4. battery module; 5. secondary battery; 51. housing; 52. electrode assembly; and 53. cover plate.

### DESCRIPTION OF EMBODIMENTS

The following specifically discloses in detail embodiments of the current collector, secondary battery, battery module, battery pack, and electric apparatus of this application, with appropriate reference to the accompanying drawings. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for those skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise stated, all the embodiments and optional embodiments of this application can be combined with each other to form new technical solutions.

Unless otherwise stated, all the technical features and optional technical features of this application can be combined with each other to form new technical solutions.

Unless otherwise stated, all the steps in this application can be performed sequentially or randomly, preferably, performed sequentially. For example, the method including steps (a) and (b) indicates that the method may include steps (a) and (b) performed sequentially or may include steps (b) and (a) performed sequentially. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise stated, "include" and "contain" mentioned in this application are inclusive or may be exclusive. For example, the terms "include" and "contain" can mean that other unlisted components may also be included or contained, or only listed components are included or contained.

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Metal materials are commonly used current collector materials in secondary batteries. However, during the charge and discharge cycle of sodium secondary batteries, current collectors made of metal are difficult to match the high voltage on the positive electrode side of sodium secondary batteries, and are easily oxidized on the high-voltage positive electrode side, leading to deterioration of the storage performance and calendar life of the battery. Particularly in secondary batteries with no negative electrode, the current collector has no negative electrode active material on the surface, causing direct contact between the current collector and the electrolyte solution. The current collectors in the prior art are difficult to meet the usage needs of sodium secondary batteries with no negative electrode. Moreover, in the prior art, surface coating is often used to improve the surface properties of current collectors, thereby reducing the oxidation and corrosion of metal materials. However, this process is costly, time-consuming, and cannot meet market demands.

### [Current collector]

Based on this, this application proposes a current collector for sodium secondary battery, where the current collector includes a metal substrate and a surface treatment layer formed on at least one side of the metal substrate, and the surface treatment layer includes oxide and/or nitride of the metal substrate.

The surface treatment layer of the current collector can protect the metal from corrosion by anions in the electrolyte solution, enhance tolerance under high voltage, effectively improve the coulombic efficiency and cycle capacity retention rate of the battery, and improve the storage performance of the battery.

In this specification, the term "surface treatment layer" is a layer formed on the surface of the metal substrate of the current collector in a physical or chemical method to change the surface state of the current collector substrate.

In some embodiments, the surface treatment layer has a thickness of 2 nm to 200 nm, and optionally 5 nm to 50 nm.

In some embodiments, optionally, the surface treatment layer has a thickness of 2 nm, 3 nm, 4 nm, 5 nm, 6 nm, 7 nm, 8 nm, 9 nm, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, 100 nm, 110 nm, 120 nm, 130 nm, 140 nm, 150 nm, 160 nm, 170 nm, 180 nm, 190 nm, or 200 nm.

Controlling the thickness of the surface treatment layer to 2 nm to 200 nm can protect the current collector from corrosion by anions in the electrolyte solution and enhance the tolerance of the current collector under high voltage while ensuring that the electronic conductivity of the current collector is not affected, thereby improving the coulombic efficiency and cycle capacity retention rate of the battery. Additionally, controlling the thickness of the surface treatment layer to 2 nm to 200 nm can prevent excessive thickness that would lead to increased internal resistance and decreased cycling performance and decreased energy density of the battery. Controlling the thickness of the surface treatment layer to 5 nm to 50 nm is favorable for further improving the coulombic efficiency and cycle capacity retention rate of the battery.

In some embodiments, the surface treatment layer includes one or more of aluminum oxide, titanium oxide, copper oxide, nickel oxide, and titanium nitride.

In some embodiments, the surface treatment layer is obtained through heat treatment performed on the metal substrate, and the metal substrate includes at least one of aluminum, nickel, copper, and titanium.

The heat treatment process is simple and low-cost, and the surface treatment layer can be effectively regulated in the way of controlling the heat treatment, which is suitable for large-scale popularization and application. Performing heat treatment on the metal substrate of the current collector to form a surface treatment layer on the current collector can protect the collector from anion corrosion in the electrolyte solution and enhance the tolerance of the current collector under high voltage without affecting the electronic conductivity of the current collector, avoid or mitigate reactions between the electrolyte solution and metal ions, and improve the coulombic efficiency and cycle life of the battery.

In some embodiments, the metal substrate of the current collector includes aluminum, the surface treatment layer includes aluminum oxide, and the aluminum oxide is prepared through heat treatment performed on aluminum. In some embodiments, the metal substrate of the current collector includes titanium, the surface treatment layer includes titanium oxide and/or titanium nitride, and the titanium oxide and/or titanium nitride is prepared through heat treatment performed on titanium. In some embodiments, the metal substrate of the current collector includes nickel, the surface treatment layer includes nickel oxide, and the nickel oxide is prepared through heat treatment performed on nickel. In some embodiments, the metal substrate of the current collector includes copper, the surface treatment layer includes copper oxide, and the copper oxide is prepared through heat treatment performed on copper.

In some embodiments, the surface treatment layer has a thickness of 100 nm to 3000 nm, and optionally 500 nm to 1000 nm. In some embodiments, optionally, the surface treatment layer has a thickness of 100 nm, 150 nm, 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 950 nm, 1000 nm, 1500 nm, 2000 nm, 2500 nm, or 3000 nm.

In some embodiments, the surface treatment layer includes copper oxide nanoneedles, where the copper oxide nanoneedles grows perpendicular to a surface of the metal substrate, and optionally, the nanoneedles have a length of 100 nm to 3000 nm, and the nanoneedles have a width of 30 nm to 200 nm.

The length and width of the nanoneedles may be characterized by scanning electron microscopy and transmission electron microscopy. Nanoneedles differ from nanowires in that the width of the base of the nanoneedles close to the metal substrate is different from the width of end of the nanoneedles far from the metal substrate. The average width of the base and the end of the nanoneedles is taken as the width of the nanoneedles.

In some embodiments, the nanoneedles has a length of 100 nm, 200 nm, 300 nm, 400 nm, 500 nm, 600 nm, 700 nm, 800 nm, 900 nm, 1000 nm, 1500 nm, 2000 nm, 2500 nm, or 3000 nm.

In some embodiments, the nanoneedles has a width of 30 nm, 40 nm, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, or 200 nm.

The current collector containing nanoneedles may be served as a negative electrode, and the copper oxide nanoneedles on the surface of the current collector can provide more sufficient nucleation sites and effectively reduce local current density, which promotes more uniform deposition of metal ions on the surface of the current collector, helps inhibit the formation of metal dendrites and improves the coulombic efficiency and cycle capacity retention rate of the battery.

In this document, the term "nucleation site" refers to the position where metal ions are deposited as metal atoms on the negative electrode when the negative electrode receives electrons.

In some embodiments, the surface treatment layer is obtained through chemical treatment performed on the metal substrate, and the metal substrate includes copper.

This application can effectively control the morphology of the surface treatment layer and improve the cycle and storage stability of the battery through low-energy chemical treatment.

In some embodiments, the surface treatment layer has a surface density of 0.1 g/m² to 20 g/m².

In some embodiments, the surface treatment layer may have a surface density of 0.1 g/m², 0.2 g/m², 0.3 g/m², 0.4 g/m², 0.5 g/m², 0.6 g/m², 0.7 g/m², 0.8 g/m², 0.9 g/m², 1 g/m², 1.5 g/m², 2 g/m², 2.5 g/m², 3 g/m², 3.5 g/m², 4 g/m², 4.5 g/m², 5 g/m², 6 g/m², 7 g/m², 8 g/m², 9 g/m², 10 g/m², 11 g/m², 12 g/m², 13 g/m², 14 g/m², 15 g/m², 16 g/m², 17 g/m², 18 g/m², 19 g/m², or 20 g/m².

Controlling the surface density of the surface treatment layer to 0.1 g/m² to 20 g/m² can protect the metal from anion corrosion in the electrolyte solution while ensuring that the conductivity of the current collector is not too low, thereby improving the tolerance of the current collector under high voltage and optimizing the coulombic efficiency and cycle capacity retention rate of the battery.

In some embodiments, the metal substrate is in the form of a foil or foam, and the metal substrate of the current collector is optionally one or more of aluminum foil, copper foil, titanium foil, and foam nickel.

In some embodiments, the foil metal substrate has a thickness of 5 µm to 500 µm, and optionally 10 µm to 80 µm, and the foam metal substrate has a porosity of higher than 90%.

In some embodiments, optionally, the foil metal substrate has a thickness of 5 µm, 10 µm, 20 µm, 30 µm, 40 µm, 50 µm, 60 µm, 70 µm, 80 µm, 90 µm, 100 µm, 150 µm, 200 µm, 250 µm, 300 µm, 350 µm, 400 µm, 450 µm, or 500 µm.

When the foil metal substrate has a thickness of 5 µm to 500 µm and the foam metal substrate has a porosity of higher than 90%, it can ensure that the current collector has good conductivity, high mechanical strength, and low internal resistance, which is favorable for the stability and safety of the battery.

In some embodiments, the current collector has a conductivity of not less than 0.1 S/cm. In some embodiments, the current collector has a conductivity of not less than 0.2 S/cm. In some embodiments, the current collector has a conductivity of not less than 0.3 S/cm. In some embodiments, the current collector has a conductivity of not less than 0.4 S/cm. In some embodiments, the current collector has a conductivity of not less than 0.5 S/cm. In some embodiments, the current collector has a conductivity of not less than 0.6 S/cm. In some embodiments, the current collector has a conductivity of not less than 0.7 S/cm. In some embodiments, the current collector has a conductivity of not less than 0.8 S/cm. In some embodiments, the current collector has a conductivity of not less than 0.9 S/cm. In some embodiments, the current collector has a conductivity of not less than 1.0 S/cm.

When the conductivity of the current collector is not less than 0.1 S/cm, it can ensure good conductivity of the current collector, promote electron transfer between components of the battery, and improve the specific capacity and rate performance of the battery.

In some embodiments, the current collector is served as a positive electrode current collector of a secondary battery.

In some embodiments, the current collector is served as a positive electrode current collector of a secondary battery, and the metal substrate of the current collector is aluminum foil. The current collector includes a surface treatment layer formed on at least one side of the aluminum foil, and the surface treatment layer includes aluminum oxide. The aluminum oxide surface treatment layer of the positive electrode current collector can increase a thickness of a passivation layer of the current collector itself, so as to increase a thickness of a passivation layer on the surface of the current collector. This increase in thickness can reduce or avoid the corrosion to the current collector caused by the destruction of the oxide layer by some anions in the electrolyte solution while ensuring that the conductivity of the current collector is not affected, thereby enhancing the tolerance of the current collector under high voltage.

In some embodiments, the current collector is served as a positive electrode current collector of a secondary battery, and the metal substrate of the current collector is titanium foil. The current collector includes a surface treatment layer formed on at least one side of the titanium foil, and the surface treatment layer includes titanium oxide or titanium nitride. The titanium oxide or titanium nitride surface treatment layer of the positive electrode current collector can protect the current collector from corrosion by anions in the electrolyte solution and enhance tolerance of the current collector under high voltage without affecting the conductivity of the current collector, thereby improving the coulombic efficiency and cycle capacity retention rate of the battery.

In some embodiments, the current collector is served as a positive electrode current collector of a secondary battery, and the metal substrate of the current collector is titanium foil. The current collector includes a surface treatment layer formed on at least one side of the titanium foil, and the surface treatment layer includes titanium oxide and titanium nitride. The titanium oxide and titanium nitride surface treatment layer of the positive electrode current collector can further enhance the stability of the current collector through the heterogeneous structure, improve the coulombic efficiency and cycle capacity retention rate of the battery, and enhance the storage stability of the battery.

In some embodiments, the current collector is served as a negative electrode current collector of a secondary battery, and the metal substrate of the current collector is aluminum foil. The current collector includes a surface treatment layer formed on at least one side of the aluminum foil, and the surface treatment layer includes aluminum oxide. The aluminum oxide surface treatment layer of the negative electrode current collector can improve the affinity of the current collector to metal ions, making the deposition of metal ions more uniform and dense. Therefore, forming a dense deposition morphology alleviates the reactions between the electrolyte solution and metal ions, improves the coulombic efficiency and cycle capacity retention rate of the battery, and enhances the storage stability of the battery.

In some embodiments, the current collector is served as a negative electrode current collector of a secondary battery.

In this document, the term "nucleation overpotential" is the additional potential required for nucleation, or the value deviating from its proper deposition and stripping potential and deriving from the critical nucleation radius.

In this document, nucleation overpotential is mainly used to characterize the deposition kinetics of metal ions and can characterize the uniformity of deposition of metal ions, which can be tested by any known method.

In some embodiments, the current collector is served as a negative electrode current collector of a secondary battery, and the metal substrate of the current collector is titanium foil. The current collector includes a surface treatment layer formed on at least one side of the titanium foil, and the surface treatment layer includes titanium oxide. The titanium oxide surface treatment layer of the negative electrode current collector can reduce or avoid the reactions between the electrolyte solution and metal ions while reducing the nucleation overpotential of metal ions, promote more uniform and dense deposition of metal ions, improve the coulombic efficiency and cycle capacity retention rate of the battery, and enhance the storage stability of the battery.

In some embodiments, the current collector is served as a negative electrode current collector of a secondary battery, and the metal substrate of the current collector is titanium foil. The current collector includes a surface treatment layer formed on at least one side of the titanium foil, and the surface treatment layer includes titanium oxide and titanium nitride. Hybridization treatment on the surface of the current collector can further enhance the stability of the current collector. In addition, the heterogeneous structure of titanium oxide and titanium nitride can improve the affinity of the negative electrode current collector for metal ions, enhance the surface diffusion kinetics of metal ions, reduce the nucleation overpotential of metal ions, promote more uniform and dense deposition of metal ions, improve the coulombic efficiency and cycle capacity retention rate of the battery, and enhance the storage stability of the battery.

In some embodiments, the current collector is served as a negative electrode current collector of a secondary battery, and the metal substrate of the current collector is foam nickel. The current collector includes a surface treatment layer formed on at least one side of the foam nickel, and the surface treatment layer includes nickel oxide. The nickel oxide surface treatment layer of the negative electrode current collector can improve the affinity of the current collector to metal ions, improve the deposition morphology of metal ions, avoid or reduce the reactions between the electrolyte solution and metal ions, improve the coulombic efficiency and cycle capacity retention rate of the battery, and enhance the storage stability of the battery.

In some embodiments, the current collector is served as a negative electrode current collector of a secondary battery, and the metal substrate of the current collector is copper foil. The current collector includes a surface treatment layer formed on at least one side of the copper foil, and the surface treatment layer includes copper oxide. The copper oxide surface treatment layer of the negative electrode current collector can improve the affinity of the current collector to metal ions, guide the uniform and regular deposition of metal ions, avoid or reduce the reactions between the electrolyte solution and metal ions, improve the coulombic efficiency and cycle capacity retention rate of the battery, and enhance the storage stability of the battery.

### [Preparation method of current collector]

In an embodiment of this application, a current collector preparation method is provided, where the preparation method includes the following steps: performing heat treatment and/or chemical treatment on a metal substrate to form a surface treatment layer on at least one side of the metal substrate.

Using the above heat treatment method to form a surface treatment layer on at least one side of the metal substrate can protect the current collector from corrosion by anions in the electrolyte solution and enhance the tolerance of the current collector under high voltage without affecting the electronic conductivity of the current collector, avoid or mitigate reactions between the electrolyte solution and metal ions, and improve the coulombic efficiency and cycle life of the battery. Moreover, the heat treatment process is simple and suitable for large-scale popularization and application.

In some embodiments, the metal substrate is aluminum, the heat treatment is performed in an atmosphere of air or oxygen, the heat treatment is performed at 80°C to 350°C, and optionally 160°C to 280°C, the heat treatment is performed for 2 min to 120 min, and optionally 5 min to 30 min, and the surface treatment layer includes aluminum oxide.

In some embodiments, the metal substrate is aluminum, the heat treatment is performed in an atmosphere of air or oxygen, the surface treatment layer includes aluminum oxide, the heat treatment is optionally performed at 80 °C, 90 °C, 100°C, 110°C, 120 °C, 130 °C, 140 °C, 150 °C, 160 °C, 170 °C, 180°C, 190 °C, 200°C, 210 °C, 220 °C, 230 °C, 240 °C, 250 °C, 260 °C, 270 °C, 280 °C, 290 °C, 300 °C, 310 °C, 320 °C, 330 °C, 340 °C, or 350 °C, and the heat treatment is optionally performed for 2 min, 5 min, 10 min, 15 min, 20 min, 25 min, 30 min, 35 min, 40 min, 45 min, 50 min, 55 min, 60 min, 65 min, 70 min, 75 min, 80 min, 85 min, 90 min, 95 min, 100 min, 105 min, 110 min, 115 min, or 120 min.

In some embodiments, the metal substrate is titanium, the heat treatment is performed in an atmosphere of air or oxygen, the heat treatment is performed at 200°C to 500°C, and optionally 300°C to 500°C, the heat treatment is performed for 2 min to 120 min, and optionally 5 min to 30 min, and the surface treatment layer includes titanium oxide.

In some embodiments, the metal substrate is titanium, the heat treatment is performed in an atmosphere of air or oxygen, the surface treatment layer includes titanium oxide, the heat treatment is optionally performed at 200 °C, 210 °C, 220 °C, 230 °C, 240 °C, 250 °C, 260 °C, 270 °C, 280 °C, 290 °C, 300 °C, 310 °C, 320 °C, 330 °C, 340 °C, 350 °C, 360 °C, 370 °C, 380 °C, 390 °C, 400 °C, 410 °C, 420 °C, 430 °C, 440 °C, 450 °C, 460 °C, 470 °C, 480 °C, 490 °C, or 500 °C, and the heat treatment time is optionally performed for 2 min, 5 min, 10 min, 15 min, 20 min, 25 min, 30 min, 35 min, 40 min, 45 min, 50 min, 55 min, 60 min, 65 min, 70 min, 75 min, 80 min, 85 min, 90 min, 95 min, 100 min, 105 min, 110 min, 115 min, or 120 min.

In some embodiments, the metal substrate is copper, the heat treatment is performed in an atmosphere of air or oxygen, the heat treatment is performed at 200°C to 500°C, and optionally 200°C to 400°C, the heat treatment is performed for 2 min to 120 min, and optionally 5 min to 30 min, and the surface treatment layer includes copper oxide.

In some embodiments, the metal substrate is copper, the heat treatment is performed in an atmosphere of air or oxygen, the surface treatment layer includes copper oxide, the heat treatment is optionally performed at 200 °C, 210 °C, 220 °C, 230 °C, 240 °C, 250 °C, 260 °C, 270 °C, 280 °C, 290 °C, 300 °C, 310 °C, 320 °C, 330 °C, 340 °C, 350 °C, 360 °C, 370 °C, 380 °C, 390 °C, 400 °C, 410 °C, 420 °C, 430 °C, 440 °C, 450 °C, 460 °C, 470 °C, 480 °C, 490 °C, or 500 °C, and the heat treatment time is optionally performed for 2 min, 5 min, 10 min, 15 min, 20 min, 25 min, 30 min, 35 min, 40 min, 45 min, 50 min, 55 min, 60 min, 65 min, 70 min, 75 min, 80 min, 85 min, 90 min, 95 min, 100 min, 105 min, 110 min, 115 min, or 120 min.

In some embodiments, the metal substrate is nickel, the heat treatment is performed in an atmosphere of air or oxygen, the heat treatment is performed at 80°C to 450°C, and optionally 180°C to 300°C, the heat treatment is performed for 2 min to 120 min, and optionally 5 min to 30 min, and the surface treatment layer includes nickel oxide.

In some embodiments, the metal substrate is nickel, the heat treatment is performed in an atmosphere of air or oxygen, the surface treatment layer includes nickel oxide, the heat treatment is optionally performed at 80 °C, 90 °C, 100 °C, 110 °C, 120 °C, 130 °C, 140 °C, 150 °C, 160 °C, 170 °C, 180 °C, 190 °C, 200 °C, 210 °C, 220 °C, 230 °C, 240 °C, 250 °C, 260 °C, 270 °C, 280 °C, 290 °C, 300 °C, 310 °C, 320 °C, 330 °C, 340 °C, 350 °C, 360 °C, 370 °C, 380 °C, 390 °C, 400 °C, 410 °C, 420 °C, 430 °C, 440 °C, or 450 °C, and the heat treatment is optionally performed for 2 min, 5 min, 10 min, 15 min, 20 min, 25 min, 30 min, 35 min, 40 min, 45 min, 50 min, 55 min, 60 min, 65 min, 70 min, 75 min, 80 min, 85 min, 90 min, 95 min, 100 min, 105 min, 110 min, 115 min, or 120 min.

In some embodiments, the metal substrate is titanium, the heat treatment is performed in an atmosphere of nitrogen, a gas flow rate is 10 mL/min to 200 mL/min, and optionally 20 mL/min to 80 mL/min, the heat treatment is performed at 500°C to 800°C, and optionally 650°C to 800°C, the heat treatment is performed for 2 min to 120 min, and optionally 5 min to 30 min, and the surface treatment layer includes titanium nitride.

In some embodiments, the metal substrate is titanium, the heat treatment is performed in an atmosphere of nitrogen, the surface treatment layer includes titanium nitride, the gas flow rate is optionally 10 mL/min, 20 mL/min, 30 mL/min, 40 mL/min, 50 mL/min, 60 mL/min, 70 mL/min, 80 mL/min, 90 mL/min, 100 mL/min, 110 mL/min, 120 mL/min, 130 mL/min, 140 mL/min, 150 mL/min, 160 mL/min, 170 mL/min, 180 mL/min, 190 mL/min, or 200 mL/min, the heat treatment is optionally performed at 500 °C, 550 °C, 560 °C, 570 °C, 580 °C, 590 °C, 600 °C, 610 °C, 620 °C, 630 °C, 640 °C, 650 °C, 660 °C, 670 °C, 680 °C, 690 °C, 700 °C, 710 °C, 720 °C, 730 °C, 740 °C, 750 °C, 760 °C, 770 °C, 780 °C, 790 °C, or 800 °C, and the heat treatment is optionally performed for 2 min, 5 min, 10 min, 15 min, 20 min, 25 min, 30 min, 35 min, 40 min, 45 min, 50 min, 55 min, 60 min, 65 min, 70 min, 75 min, 80 min, 85 min, 90 min, 95 min, 100 min, 105 min, 110 min, 115 min, or 120 min.

Controlling the temperature and time of the heat treatment within an appropriate range can form a uniform, dense, and stable surface treatment layer on the surface of the current collector. Such surface treatment layer can protect the current collector from corrosion by anions in the electrolyte solution and enhance the tolerance of the current collector under high voltage without affecting the electronic conductivity of the current collector, avoid or mitigate the reactions between the electrolyte solution and metal ions, and improve the coulombic efficiency and cycle life of the battery. By adjusting different process parameters and simply controlling the process parameters, the composition and morphology of the surface treatment layer can be adjusted to match different positive/negative electrode active materials and achieve battery structure design and performance optimization.

In some embodiments, the preparation method is specifically: after performing heat treatment on the metal substrate, performing post-treatment in a different atmosphere to form a surface treatment layer on at least one side of the metal substrate.

In some embodiments, the metal substrate is titanium, the heat treatment is performed in an atmosphere of air, the heat treatment is performed at 200°C to 500°C, and the heat treatment is performed for 2 min to 120 min; the post-treatment is performed in an atmosphere of nitrogen, the post-treatment is performed at 600°C to 900°C, and the post-treatment time is performed for 2 min to 120 min; and the surface treatment layer includes titanium oxide and titanium nitride.

In some embodiments, the metal substrate is titanium, the heat treatment is performed in an atmosphere of air, the heat treatment is optionally performed at 200 °C, 210 °C, 220 °C, 230 °C, 240 °C, 250 °C, 260 °C, 270 °C, 280 °C, 290 °C, 300 °C, 310 °C, 320 °C, 330 °C, 340 °C, 350 °C, 360 °C, 370 °C, 380 °C, 390 °C, 400 °C, 410 °C, 420 °C, 430°C, 440 °C, 450 °C, 460 °C, 470 °C, 480 °C, 490 °C or 500 °C, and the heat treatment is optionally performed for 2 min, 5 min, 10 min, 15 min, 20 min, 25 min, 30 min, 35 min, 40 min, 45 min, 50 min, 55 min, 60 min, 65 min, 70 min, 75 min, 80 min, 85 min, 90 min, 95 min, 100 min, 105 min, 110 min, 115 min, or 120 min; the post-treatment is performed in an atmosphere of nitrogen, the post-treatment is optionally performed at 600 °C, 610 °C, 620 °C, 630 °C, 640 °C, 650 °C, 660 °C, 670 °C, 680 °C, 690 °C, 700 °C, 710 °C, 720 °C, 730 °C, 740 °C, 750 °C, 760 °C, 770 °C, 780 °C, 790 °C, 800 °C, 810 °C, 820 °C, 830 °C, 840 °C, 850 °C, 860 °C, 870 °C, 880 °C, 890 °C or 900 °C, and the post-treatment time is optionally performed for 2 min, 5 min, 10 min, 15 min, 20 min, 25 min, 30 min, 35 min, 40 min, 45 min, 50 min, 55 min, 60 min, 65 min, 70 min, 75 min, 80 min, 85 min, 90 min, 95 min, 100 min, 105 min, 110 min, 115 min, or 120 min; and the surface treatment layer includes titanium oxide and titanium nitride.

By performing nitridation after oxidation, a heterogeneous structure of titanium oxide and titanium nitride can be formed on the surface of the titanium foil, further enhancing the stability of the current collector. This heterogeneous structure also improves the affinity of the current collector for metal ions, enhances the surface diffusion kinetics of metal ions, reduces the nucleation overpotential of metal ions, guides the uniform and regular deposition of metal ions, further improves the coulombic efficiency and cycle capacity retention rate of the battery, and enhances the storage stability of the battery.

In some embodiments, the preparation method is specifically: preforming chemical treatment on the metal substrate in an alkaline solution to form a surface treatment layer on at least one side of the metal substrate.

In some embodiments, the metal substrate is copper, the alkaline solution has a pH value of 11 to 12, the chemical treatment is performed at 45°C to 90°C, and the chemical treatment is performed for 0.5 h to 12 h.

In some embodiments, the metal substrate is copper, the alkaline solution optionally has a pH value of 11, 11.1, 11.2, 11.3, 11.4, 11.5, 11.6, 11.7, 11.8, 11.9, or 12, the chemical treatment is optionally performed at 45 °C, 50 °C, 55 °C, 60 °C, 65 °C, 70 °C, 75 °C, 80 °C, 85 °C or 90° C, and the chemical treatment is optionally performed for 0.5 h, 1 h, 1.5 h, 2 h, 2.5 h, 3 h, 3.5 h, 4 h, 4.5 h, 5 h, 5.5 h, 6 h, 6.5 h, 7 h, 7.5 h, 8 h, 8.5 h, 9 h, 9.5 h, 10 h, 10.5 h, 11 h, 11.5, or 12 h. In some embodiments, the alkaline solution is aqueous ammonia, sodium hydroxide, or potassium hydroxide. In some embodiments, the alkaline solution is optionally aqueous ammonia.

Using a simple alkaline solution to soak the copper current collector can form a layer of copper oxide nanoneedles on the surface of the copper current collector, which increases the deposition sites and active area of the current collector, facilitates the diffusion of metal ions at the electrode/electrolyte solution interface, reduces the nucleation overpotential and local current density, and guides the uniform deposition of metal ions. This also further improves production efficiency while improving performance and significantly reduces preparation costs and energy consumption. Using aqueous ammonia as the alkaline solution will further improve the performance of the battery through the interaction between cations in aqueous ammonia and the surface treatment layer.

### [Secondary battery]

In some embodiments, a secondary battery includes a positive electrode plate and a negative electrode plate, where the positive electrode plate and/or negative electrode plate includes the current collector according to some embodiments or a current collector prepared using the preparation method according to some embodiments.

In some embodiments, the secondary battery is a sodium battery.

The sodium battery is a battery where a negative electrode active material contains sodium metal. Metallic sodium may be pre-deposited on one side of the current collector as a negative electrode or may be deposited in situ during the charge and discharge of the battery, meaning the sodium battery includes a sodium battery with no negative electrode.

In some embodiments, the secondary battery is a sodium battery with no negative electrode. The sodium battery with no negative electrode may have a high energy density.

The sodium battery with no negative electrode does not include a negative electrode active material, but includes only a negative electrode current collector. During the initial charge, sodium ions receive electrons on the negative electrode side and deposit as metallic sodium on surface of the current collector to form a metallic phase of sodium. During discharge, the metallic sodium can be converted into sodium ions and return to the positive electrode, achieving cyclic charge and discharge. Compared to sodium secondary batteries and sodium batteries, the sodium battery with no negative electrode can achieve higher energy density as it is not limited by the negative electrode material.

In some embodiments, the sodium battery with no negative electrode has a CB value of less than or equal to 0.1. The CB value is the unit area capacity of the negative electrode plate divided by the unit area capacity of the positive electrode plate in the secondary battery. As the battery with no negative electrode does not include a negative electrode active material, the unit area capacity of the negative electrode plate is relatively small, and the CB value of the secondary battery is less than or equal to 0.1.

In some embodiments, the positive electrode plate further includes a positive electrode active material layer formed on at least part of the surface of the positive electrode current collector. The positive electrode active material layer includes a positive electrode active material, and the positive electrode active material may include one or more of Prussian blue compound, polyanionic compound, and layered transition metal oxide.

The transition metal in the layered transition metal oxide may be at least one of Mn, Fe, Ni, Co, Cr, Cu, Ti, Zn, V, Zr, and Ce. Optionally, the layered transition metal oxide is, for example, NaₓMO₂, where M is one or more of Ti, V, Mn, Co, Ni, Fe, Cr, and Cu, and 0<x≤1.

The polyanionic compound may be a compound with metal ions, transition metal ions, and tetrahedral (YO₄)ⁿ⁻ anionic units. Optionally, the metal ion may be one of sodium ion, lithium ion, potassium ion, and zinc ion; the transition metal may be optionally at least one of Mn, Fe, Ni, Co, Cr, Cu, Ti, Zn, V, Zr, and Ce; Y may be optionally at least one of P, S, and Si; and n represents the valence state of (YO₄)ⁿ⁻.

The Prussian blue compound may be a compound with sodium ions, transition metal ions, and cyanide ions (CN-). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are independently at least one of Ni, Cu, Fe, Mn, Co, and Zn, and 0<a≤2, 0<b<1, 0<c<1.

The positive electrode active material layer may further include a conductive agent to improve the conductivity of the positive electrode. The conductive agent can be one or more of Super P, acetylene black, carbon black, Ketjen black, carbon dot, carbon nanotube, graphite, graphene, and carbon nanofiber.

The positive electrode active material layer may further include a binder to firmly bind a positive electrode active material and an optional conductive agent onto the positive electrode current collector. Optionally, the binder may be at least one of polyvinylidene fluoride (PVDF), polytetrafluoroethylene (PTFE), polyacrylic acid (PAA), polyvinyl alcohol (PVA), ethylene vinyl acetate (EVA), styrene-butadiene rubber (SBR), carboxymethyl cellulose (CMC), sodium alginate (SA), polymethacrylic acid (PMA), and carboxymethyl chitosan (CMCS).

In some embodiments, the surface of the positive electrode active material particles has an enveloping layer, which includes one or more of carbon material, polyaniline (PANI), polypyrrole (PPy), poly(3,4-ethylenedioxythiophene) (PEDOT), aluminum oxide (Al₂O₃), zinc oxide (ZnO), titanium oxide (TiO₂), zirconium oxide (ZrO₂), magnesium oxide (MgO), silicon oxide (SiO₂), lanthanum oxide (La₂O₃), sodium fluoride (NaF), lithium fluoride (LiF), and aluminum fluoride (AlF₃); and the carbon material includes one or more of amorphous carbon, graphite, and graphene.

The enveloping layer can effectively enhance the stability of the positive electrode active material, reduce the metal dissolution and particle breakage of the positive electrode active material during cycling, and effectively improve the cycling performance and storage stability of the battery.

In some embodiments, the enveloping layer has a thickness of 2 nm to 1000 nm, and optionally 10 nm to 100 nm.

In some embodiments, the enveloping layer optionally has a thickness of 2 nm, 5 nm, 10 nm, 20 nm, 30 nm, 40 nm, 50 nm, 60 nm, 70 nm, 80 nm, 90 nm, 100 nm, 150 nm, 200 nm, 250 nm, 300 nm, 350 nm, 400 nm, 450 nm, or 500 nm.

The enveloping layer with an appropriate thickness can effectively improve performance and prevent the resistance of the positive electrode film from being too high due to the enveloping layer being too thick, which may lead to a decrease in battery performance.

In some embodiments, the positive electrode plate may be prepared in the following manner: dispersing constituents used for preparing a positive electrode plate, for example, a positive electrode active material, a conductive agent, a binder, and any other constituent, in a solvent (for example, N-methylpyrrolidone) to prepare a positive electrode slurry; and applying the positive electrode slurry onto a positive electrode current collector, followed by processes such as drying and cold pressing to obtain a positive electrode plate.

In some embodiments, the secondary battery further includes an electrolyte.

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is an electrolyte solution. The electrolyte solution includes an electrolytic salt and a solvent.

In some embodiments, the electrolytic salt may be selected from at least one of sodium nitrate (NaNO₃), sodium perchlorate (NaClO₄), sodium hexafluorophosphate (NaPF₆), sodium tetrafluoroborate (NaBF₄), sodium yttrium hexafluoride (NaYF₆), sodium hexafluoroarsenate (NaAsF₆), sodium acetate (CH₃COONa), sodium trifluoroacetate (CF₃COONa), sodium bis(oxalato)borate (NaBOB), sodium difluoro(oxalato)borate (NaDFOB), sodium tetraphenylborate (NaB(C₆H₅)₄), sodium trifluoromethanesulfonate (NaOTf), sodium bis(fluorosulfonyl)imide (NaFSI), sodium bis(trifluoromethanesulfonyl)imide (NaTFSI), or sodium bis(perfluorobutanesulfonyl)imide (NaFNFSI).

In some embodiments, the electrolyte solution includes an ester solvent, where the ester solvent includes one or more of ethylene carbonate (EC), propylene carbonate (PC), butylene carbonate (BC), vinylene carbonate (VC), fluoroethylene carbonate (FEC), ethyl methyl carbonate (EMC), dimethyl carbonate (DMC), diethyl carbonate (DEC), dipropyl carbonate (DPC), methyl propyl carbonate (MPC), ethyl propyl carbonate (EPC), γ-butyrolactone (BL), 1,3-propane sultone (1,3-PS), methyl propionate (MP), methyl butyrate (MB), ethyl acetate (EA), ethyl propionate (EP), propyl propionate (PP), and ethyl butyrate (EB).

In some embodiments, the electrolyte solution includes an ether solvent, where the ether solvent includes one or more of dimethoxyethane (DME), diethylene glycol dimethyl ether (DEGDME), triethylene glycol dimethyl ether (TRGDME), tetraethylene glycol dimethyl ether (TEGDME), ethylene glycol diethyl ether (DEE), diethylene glycol diethyl ether (DEGDEE), diisopropyl ether (DIE), dibutyl ether (DBE), diethylene glycol dibutyl ether (DEGDBE), 1,4-dimethoxybutane (DMB), 1,4-diethoxybutane (DEB), 1,3-dioxolane (DOL), tetrahydrofuran (THF), 15-crown-5 (15-Crown-5), 12-crown-4 (12-Crown-4), and 18-crown-6 (18-crown-6).

For sodium batteries, the electrolyte solution containing the foregoing ether solvent helps reduce the overpotential of sodium ions, promote uniform deposition of sodium ions, reduce side reactions during cycling, and improve the coulombic efficiency and cycle capacity retention rate of the battery.

In some embodiments, optionally, the electrolyte solution further includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

In some embodiments, the secondary battery further includes a separator.

This application has no specific limitation on a type of the separator, and any well-known porous separator with good chemical stability and mechanical stability may be selected.

In some embodiments, a material of the separator may be selected from at least one of polyethylene, polypropylene, polyvinylidene fluoride, aramid fiber, polyethylene terephthalate, polytetrafluoroethylene, polyacrylonitrile, polyimide, polyamide, polyester, and natural fiber. The separator may be a single-layer film or a multi-layer composite film and is not particularly limited. When the separator is a multi-layer composite film, all layers may be made of the same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

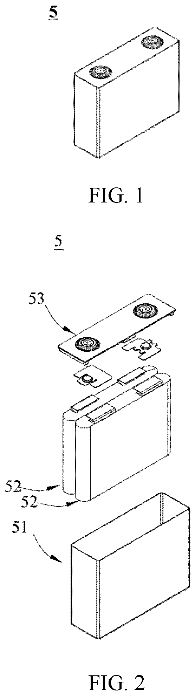

This application does not impose any special limitations on a shape of the secondary battery, and the secondary battery may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and a side plate connected to the base plate, and the base plate and the side plate enclose an accommodating cavity. The housing 51 has an opening communicating with the accommodating cavity, and the cover plate 53 may cover the opening to close the accommodating cavity. The positive electrode plate, the negative electrode plate, and the separator may be made into an electrode assembly 52 through winding or lamination. The electrode assembly 52 is enclosed in the accommodating cavity. The electrolyte solution infiltrates the electrode assembly 52. The secondary battery 5 may include one or more electrode assemblies 52, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

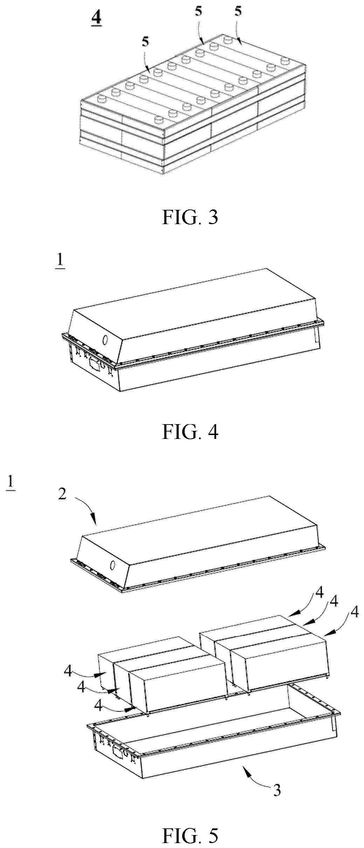

FIG. 3 shows a battery module 4 as an example. Referring to FIG. 3, in the battery module 4, a plurality of secondary batteries 5 may be sequentially arranged in a length direction of the battery module 4. Certainly, the secondary batteries may alternatively be arranged in any other manners. Further, the plurality of secondary batteries 5 may be fastened using fasteners.

Optionally, the battery module 4 may further include a housing with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 may be engaged with the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

For the electric apparatus, a secondary battery, a battery module, or a battery pack may be selected according to requirements for using the electric apparatus.

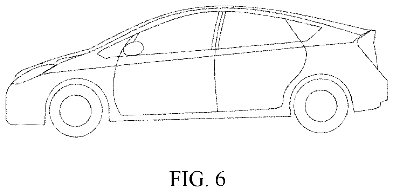

FIG. 6 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### I. Preparation method

### Example 1

### (1) Preparation of current collector

A 65 µm thick aluminum foil was taken and ultrasonically cleaned sequentially with ethanol and acetone for 10 min, then placed flat in an air drying oven for heat treatment in an air atmosphere to prepare an oxide layer on the surface.

### (2) Preparation of positive electrode plate

2.5wt% polyvinylidene fluoride binder was fully dissolved in N-methylpyrrolidone (NMP), in which 2.0wt% Super P, 1.0wt% carbon nanotubes, and 94.5wt% positive electrode active material carbon-enveloped sodium iron pyrophosphate (Na₄Fe₃(PO₄)₂P₂O₇/C) were added and stirred into uniformity to prepare a uniform positive electrode slurry. The slurry was evenly applied onto the surface of the current collector prepared in step 1, and then the current collector covered with slurry was transferred to a vacuum drying oven for bone dry. The dried electrode plate was roll-pressed and punched to obtain a positive electrode plate.

### (3) Preparation of negative electrode plate

A 65 µm thick aluminum foil was taken and ultrasonically cleaned sequentially with ethanol and acetone for 10 min, and then dried for use.

### (4) Preparation of electrolyte solution

In an argon atmosphere glove box (H₂O < 0.1 ppm, O₂ < 0.1 ppm), a sodium salt sodium hexafluorophosphate (NaPF₆) was dissolved in an organic solvent dimethoxyethane (DME) and stirred into uniformity, where a concentration of NaPF₆ was 1 mol/L based on a total volume of the electrolyte.

### (5) Preparation of battery

The positive electrode plate, electrolyte, and negative electrode plate were stacked in sequence, then wound into a bare cell. The bare cell was welded with tabs and the bare cell was placed into an aluminum shell and baked at 80°C to remove water. The aluminum shell was injected with the electrolyte solution and sealed to obtain an uncharged battery. The uncharged battery then underwent processes such as standing, hot and cold pressing, formation, shaping, and capacity testing in sequence to obtain the sodium metal battery product with no negative electrode of Example 1.

In Examples 2 to 36, the types of current collectors for the positive or negative electrode plates, the surface treatment methods and parameters, or the positive electrode active materials were adjusted.

### Examples 2 to 7

The preparation methods of Examples 2 to 7 were basically the same as that of Example 1, except that the temperature or time for the surface heat treatment of the positive electrode current collector was adjusted.

### Example 8

The preparation method of Example 8 was basically the same as that of Example 3, except that the same heat-treated current collectors were used as both the positive electrode current collector and negative electrode current collector.

### Example 9

The preparation method of Example 9 was basically the same as that of Example 1, except that titanium foil was used as the positive electrode current collector, and the temperature and time for the surface heat treatment of the positive electrode current collector were adjusted.

### Examples 10 to 14

The preparation methods of Examples 10 to 14 were basically the same as that of Example 9, except that the temperature and/or time for the surface heat treatment of the positive electrode current collector were adjusted.

### Example 15

The preparation method of Example 15 was basically the same as that of Example 13, except that titanium foil was used as the negative electrode current collector.

### Example 16

The preparation method of Example 16 was basically the same as that of Example 15, except that the same heat-treated current collectors were used as both the positive electrode current collector and negative electrode current collector.

### Example 17

The preparation method of Example 17 was basically the same as Example 9, except that (1) the atmosphere, temperature, and time for the surface heat treatment of the positive electrode current collector were adjusted.

### Examples 18 and 19

The preparation methods of Examples 18 and 19 were basically the same as that of Example 17, except that the temperature of the surface heat treatment of the positive electrode current collector was adjusted.

### Example 20

The preparation method of Example 20 was basically the same as that of Example 18, except that the same heat-treated current collectors were used as both the positive electrode current collector and negative electrode current collector.

### Example 21

The preparation method of Example 21 was basically the same as that of Example 17, except for the surface treatment method of the positive electrode current collector. In Example 21, the positive electrode current collector was first subjected to surface heat treatment in an air atmosphere and then post treatment in a nitrogen atmosphere. The specific method was as follows:

A 65 µm thick titanium foil was taken and ultrasonically cleaned sequentially with ethanol and acetone for 10 min, then placed flat in an air drying oven for heat treatment at 420°C in an air atmosphere for 10 minutes. After that, the air atmosphere was replaced with a nitrogen atmosphere, and the titanium foil was subjected to heat treatment at 680°C in the nitrogen atmosphere for 10 minutes to prepare a heterogeneous structure containing titanium nitride and titanium oxide on the surface.

### Example 22

The preparation method of Example 22 was basically the same as that of Example 21, except that the same heat-treated current collectors were used as both the positive electrode current collector and negative electrode current collector.

### Example 23

The preparation method of Example 23 was basically the same as that of Example 1, except that the negative electrode current collector aluminum foil was heat-treated, and the positive electrode current collector aluminum foil was not heat-treated. The negative electrode current collector aluminum foil was heat-treated at 200°C in air for 10 minutes.

### Example 24

The preparation method of Example 24 was basically the same as that of Example 23, except that foam nickel was used as the negative electrode current collector, and the positive electrode current collector aluminum foil was not heat-treated. The negative electrode current collector foam nickel was heat-treated at 240°C in air for 10 minutes.

### Example 25

The preparation method of Example 25 was basically the same as that of Example 22, except that aluminum foil was used as the positive electrode current collector, and the positive electrode current collector was not surface heat-treated.

### Example 26

The preparation method of Example 26 was basically the same as that of Example 24, except that the positive electrode current collector aluminum foil was surface heat-treated. The method of surface heat treatment for the positive electrode current collector aluminum foil in Example 26 was the same as the method of surface heat treatment for the positive electrode current collector aluminum foil in Example 3.

### Example 27

The preparation method of Example 27 was basically the same as that of Example 25, except that the positive electrode current collector aluminum foil was surface heat-treated. The method of surface heat treatment for the positive electrode current collector aluminum foil in Example 27 was the same as the method of surface heat treatment for the positive electrode current collector aluminum foil in Example 3.

### Example 28

The preparation method of Example 28 was basically the same as that of Example 1, except that: (1) no surface heat treatment was performed on the positive electrode current collector aluminum foil, and (2) copper foil was used as the negative electrode current collector, and surface chemical treatment was performed on the negative electrode current collector copper foil. The specific method for surface chemical treatment of the negative electrode current collector copper foil was as follows:

A 65 µm thick copper foil was taken and ultrasonically cleaned sequentially with ethanol and acetone for 10 min, and then soaked or ultrasonically cleaned with 5wt.% HCl for 10 min. The current collector copper foil was then rinsed with deionized water, vacuum dried, and soaked in aqueous ammonia with a concentration of (0.1 to 1)×10⁻² mol/L (laid flat with one side facing up) to prepare a nitride layer on the surface.

### Examples 29 to 31

The preparation methods of Examples 29 to 31 were basically the same as that of Example 28, except that the concentration and/or type of the alkaline solution were adjusted.

### Example 32

The preparation method of Example 32 was basically the same as that of Example 28, except that the positive electrode current collector aluminum foil was surface heat-treated. The method of surface heat treatment for the positive electrode current collector aluminum foil in Example 32 was the same as the method of surface heat treatment for the positive electrode current collector aluminum foil in Example 3.

### Example 33

The preparation method of Example 33 was basically the same as that of Example 8, except that the positive electrode active material was adjusted to Na[Cu_{1/9}Ni_{2/9}Fe_{1/3}Mn_{1/3}]O₂.

### Example 34

The preparation method of Example 34 was basically the same as that of Example 8, except that the positive electrode active material was adjusted to ZrO₂-enveloped Na_{2/3}Ni_{1/6}Mn_{2/3}Cu_{1/9}Mg_{1/18}O₂, where the enveloping layer had a thickness of 30 nm.

### Example 35

The preparation method of Example 35 was basically the same as that of Example 22, except that the positive electrode active material was adjusted to Na[Cu_{1/9}Ni_{2/9}Fe_{1/3}Mn_{1/3}]O₂.

### Example 36

The preparation method of Example 36 was basically the same as that of Example 22, except that the positive electrode active material was adjusted to ZrO₂-enveloped Na_{2/3}Ni_{1/6}Mn_{2/3}Cu_{1/9}Mg_{1/18}O₂, where the enveloping layer had a thickness of 30 nm.

The current collectors in Comparative Examples 1 to 10 were all current collectors that had not undergone heat treatment or chemical treatment. The positive electrode active materials of Comparative Examples 1 to 5 and 8 were Na₄Fe₃(PO₄)₂P₂O₇/C, the positive electrode active materials of Comparative Examples 6 and 9 were Na[Cu_{1/9}Ni_{2/9}Fe_{1/3}Mn_{1/3}]O₂, and the positive electrode active materials of Comparative Examples 7 and 10 were ZrO₂-enveloped Na_{2/3}Ni_{1/6}Mn_{2/3}Cu_{1/9}Mg_{1/18}O₂, where the enveloping layer had a thickness of 30 nm.

### II. Performance test

### (1) Test for thickness of surface treatment layer

The thickness of the surface treatment layer was tested using the Bruker Dektak XT profilometer.

### (2) Test for surface density of surface treatment layer

During surface density testing, a specified area S (m²) of the heat-treated current collector was taken at room temperature, circular holes were punched in the electrode plate using a punch machine, and a mass m1 (in g) of the punched current collector was weighed using an electronic balance. The current collector with same area and type before heat treatment was punched in the same way, and a mass m2 (g) of the current collector was weighed using an electronic balance. Finally, the surface density was calculated using the formula (m1-m2)/S (g/m²).

### (3) Test for conductivity of current collector

The conductivity of the current collector was determined using the four-probe method. Four copper plates, each with 1.5 cm in length, 1 cm in width, and 2 mm in thickness, were fixed equidistantly in one line. The spacing between the two middle copper plates was L (1 cm to 2 cm). The base material of the fixed copper plates was an insulating material. During testing, the lower end faces of the four copper plates were pressed onto the current collector under test. Direct current I was applied to the copper plates at two ends, and the voltage V was measured between the two middle copper plates. The I and V values were read three times, and the average values of I and V were taken. V/I was the resistance value of the current collector at the test site. Then the resistivity of the current collector was obtained using the resistance formula, and the conductivity was the inverse of the resistivity.

### (4) Test for nucleation overpotential

The nucleation overpotential test procedures were as follows: At 25°C, in a three-electrode cell system, the heat-treated current collector was used as the working electrode, a sodium metal sheet was used as the counter electrode, and another sodium metal sheet was used as the reference electrode. The constant current of 0.1mA/cm² was discharged to 0.3 mAh/cm², and the most negative potential recorded during the process was the nucleation overpotential.

### (5) Test for average coulombic efficiency

At 25°C, the prepared full cell was repeatedly charged and discharged, with single cycle coulombic efficiency = discharge capacity (Cd1) / charge capacity (Cc1) × 100%, which was one cycle. The number n of cycles was the number of cycles until the capacity retention rate dropped to 80%, and the average value of the coulombic efficiency from the second cycle to the n-th cycle during cycling was calculated as the coulombic efficiency of the full cell. This coulombic efficiency could characterize the stability of the battery performance during cycling. The testing procedures of the comparative examples and other examples were the same as above.

### (6) Test for number of cycles until capacity retention rate drops to 80%

At 25°C and normal pressure (0.1 MPa), the prepared full cell was charged at a constant current of 1C to a voltage of 4 V (layered oxide positive electrode) or 3.7 V (sodium iron pyrophosphate positive electrode), and then discharged at a constant current of 1C to a voltage of 3.0 V. This was one charge and discharge cycle. The first discharge capacity was taken as 100%. The charge and discharge cycle was repeated, the test was stopped when the discharge capacity decayed to 80%, and the number of cycles until the discharge capacity dropped to 80% was recorded as an indicator to evaluate the cycling performance of the full cell. The testing procedures of the comparative examples and other examples were the same as above.

### (7) Test for storage performance

At 25°C, after being left standing for 4 hours, the prepared full cell was charged at a constant current of 0.1C to 4 V, after that charged at a constant voltage of 4 V to 0.01C, and left standing for 5 minutes. At this point, the thickness of the full cell was measured. After the full cell was stored at 25°C for 60 days, the thickness of the full cell was measured again, and the cell thickness swelling rate was calculated using the formula: full cell thickness swelling rate = [(thickness after storage - thickness before storage) / thickness before storage] × 100%. The testing procedures of the comparative examples and other examples were the same as above.

### III. Analysis of testing results of examples and comparative examples

Batteries in the examples and comparative examples were prepared according to the foregoing methods, and performance parameters were measured. Results were shown in Table 1, Table 2, and Table 3.

**Table 1**

| No. | Positive electrode active material | Positive electrode current collector | Heat treatment atmosphere | Heat treatment temperature (°C) | Heat treatment time (min) | Negative electrode current collector | Heat treatment atmosphere | Heat treatment temperature (°C) | Heat treatment time (min) |
|---|---|---|---|---|---|---|---|---|---|
| Example 1 | Na₄Fe₃(PO₄)₂P₂O₇/C | Aluminum oxide+aluminum foil | Air | 200 | 30 | Aluminum foil | / | / | / |
| Example 2 | Na₄Fe₃(PO₄)₂P₂O₇/C | Aluminum oxide+aluminum foil | Air | 200 | 20 | Aluminum foil | / | / | / |
| Example 3 | Na₄Fe₃(PO₄)₂P₂O₇/C | Aluminum oxide+aluminum foil | Air | 200 | 10 | Aluminum foil | / | / | / |
| Example 4 | Na₄Fe₃(PO₄)₂P₂O₇/C | Aluminum oxide+aluminum foil | Air | 200 | 5 | Aluminum foil | / | / | / |
| Example 5 | Na₄Fe₃(PO₄)₂P₂O₇/C | Aluminum oxide+aluminum foil | Air | 240 | 10 | Aluminum foil | / | / | / |
| Example 6 | Na₄Fe₃(PO₄)₂P₂O₇/C | Aluminum oxide+aluminum foil | Air | 220 | 10 | Aluminum foil | / | / | / |
| Example 7 | Na₄Fe₃(PO₄)₂P₂O₇/C | Aluminum oxide+aluminum foil | Air | 180 | 10 | Aluminum foil | / | / | / |
| Example 8 | Na₄Fe₃(PO₄)₂P₂O₇/C | Aluminum oxide+aluminum foil | Air | 200 | 10 | Aluminum oxide+aluminum foil | Air | 200 | 10 |
| Example 9 | Na₄Fe₃(PO₄)₂P₂O₇/C | Titanium oxide + titanium foil | Air | 420 | 30 | Aluminum foil | / | / | / |
| Example 10 | Na₄Fe₃(PO₄)₂P₂O₇/C | Titanium oxide + titanium foil | Air | 420 | 10 | Aluminum foil | / | / | / |
| Example 11 | Na₄Fe₃(PO₄)₂P₂O₇/C | Titanium oxide + titanium foil | Air | 420 | 5 | Aluminum foil | / | / | / |
| Example 12 | Na₄Fe₃(PO₄)₂P₂O₇/C | Titanium oxide + titanium foil | Air | 400 | 20 | Aluminum foil | / | / | / |
| Example 13 | Na₄Fe₃(PO₄)₂P₂O₇/C | Titanium oxide + titanium foil | Air | 420 | 20 | Aluminum foil | / | / | / |
| Example 14 | Na₄Fe₃(PO₄)₂P₂O₇/C | Titanium oxide + titanium foil | Air | 440 | 20 | Aluminum foil | / | / | / |
| Example 15 | Na₄Fe₃(PO₄)₂P₂O₇/C | Titanium oxide + titanium foil | Air | 420 | 20 | Titanium foil | / | / | / |
| Example 16 | Na₄Fe₃(PO₄)₂P₂O₇/C | Titanium oxide + titanium foil | Air | 420 | 20 | Titanium oxide + titanium foil | Air | 420 | 20 |
| Example 17 | Na₄Fe₃(PO₄)₂P₂O₇/C | Titanium nitride + titanium foil | Nitrogen | 660 | 20 | Aluminum foil | / | / | / |
| Example 18 | Na₄Fe₃(PO₄)₂P₂O₇/C | Titanium nitride + titanium foil | Nitrogen | 680 | 20 | Aluminum foil | / | / | / |
| Example 19 | Na₄Fe₃(PO₄)₂P₂O₇/C | Titanium nitride + titanium foil | Nitrogen | 700 | 20 | Aluminum foil | / | / | / |
| Example 20 | Na₄Fe₃(PO₄)₂P₂O₇/C | Titanium nitride + titanium foil | Nitrogen | 680 | 20 | Titanium nitride + titanium foil | Nitrogen | 680 | 20 |
| Example 21 | Na₄Fe₃(PO₄)₂P₂O₇/C | Titanium oxide and titanium nitride + titanium foil | Air first | 420 | 10 | Aluminum foil | / | / | / |
| | | | Nitrogen after | 680 | 10 | | | | |
| Example 22 | Na₄Fe₃(PO₄)₂P₂O₇/C | Titanium oxide and titanium nitride + titanium foil | Air first | 420 | 10 | Titanium oxide and titanium nitride +Titanium foil | Air first | 420 | 10 |
| | | | Nitrogen after | 680 | 10 | | Nitrogen after | 680 | 10 |
| Example 23 | Na₄Fe₃(PO₄)₂P₂O₇/C | Aluminum foil | / | / | / | Aluminum oxide+aluminum foil | Air | 200 | 10 |
| Example 24 | Na₄Fe₃(PO₄)₂P₂O₇/C | Aluminum foil | / | / | / | Nickel oxide + nickel foam | Air | 240 | 10 |
| Example 25 | Na₄Fe₃(PO₄)₂P₂O₇/C | Aluminum foil | / | / | / | Titanium oxide and titanium nitride Titanium foil | Air first | 420 | 10 |
| | | | | | | | Nitrogen after | 680 | 10 |
| Example 26 | Na₄Fe₃(PO₄)₂P₂O₇/C | Aluminum oxide+aluminum foil | Air | 200 | 10 | Nickel oxide + nickel foam | Air | 240 | 10 |
| Example 27 | Na₄Fe₃(PO₄)₂P₂O₇/C | Aluminum | Air | 200 | 10 | Titanium oxide | Air first | 420 | 10 |
| | | oxide+aluminum foil | | | | and titanium nitride + titanium foil | Nitrogen after | 680 | 10 |
| Example 28 | Na₄Fe₃(PO₄)₂P₂O₇/C | Aluminum foil | / | / | / | Copper oxide nanoneedles + copper foil | / | / | / |
| Example 29 | Na₄Fe₃(PO₄)₂P₂O₇/C | Aluminum foil | / | / | / | Copper oxide nanoneedles + copper foil | / | / | / |
| Example 30 | Na₄Fe₃(PO₄)₂P₂O₇/C | Aluminum foil | / | / | / | Copper oxide nanoneedles + copper foil | / | / | / |
| Example 31 | Na₄Fe₃(PO₄)₂P₂O₇/C | Aluminum foil | / | / | / | Copper oxide nanoneedles + copper foil | / | / | / |
| Example 32 | Na₄Fe₃(PO₄)₂P₂O₇/C | Aluminum oxide+aluminum foil | Air | 200 | 10 | Copper oxide nanoneedles + copper foil | / | / | / |
| Example 33 | Na[Cu_{1/9}Ni_{2/9}Fe_{1/3}Mn_{1/3}]O₂ | Aluminum oxide+aluminum foil | Air | 200 | 10 | Aluminum oxide+aluminum foil | Air | 200 | 10 |
| Example 34 | ZrO₂-enveloped Na_{2/3}Ni_{1/6}Mn_{2/3}Cu_{1/9}Mg_{1/18}O₂ | Aluminum oxide+aluminum foil | Air | 200 | 10 | Aluminum oxide+aluminum foil | Air | 200 | 10 |
| Example 35 | Na[Cu_{1/9}Ni_{2/9}Fe_{1/3}Mn_{1/3}]O₂ | Titanium oxide and titanium | Air first | 420 | 10 | Titanium oxide and titanium | Air first | 420 | 10 |
| | | nitride + titanium foil | Nitrogen after | 680 | 10 | nitride +Titanium foil | Nitrogen after | 680 | 10 |
| Example 36 | ZrO₂-enveloped Na_{2/3}Ni_{1/6}Mn_{2/3}Cu_{1/9}Mg_{1/18}O₂ | Titanium oxide and titanium nitride + titanium foil | Air first | 420 | 10 | Titanium oxide and titanium nitride + titanium foil | Air first | 420 | 10 |
| | | | Nitrogen after | 680 | 10 | | Nitrogen after | 680 | 10 |
| Comparative Example 1 | Na₄Fe₃(PO₄)₂P₂O₇/C | Aluminum foil | / | / | / | Copper foil | / | / | / |
| Comparative Example 2 | Na₄Fe₃(PO₄)₂P₂O₇/C | Titanium foil | / | / | / | Copper foil | / | / | / |
| Comparative Example 3 | Na₄Fe₃(PO₄)₂P₂O₇/C | Aluminum foil | / | / | / | Nickel foam | / | / | / |
| Comparative Example 4 | Na₄Fe₃(PO₄)₂P₂O₇/C | Aluminum foil | / | / | / | Titanium foil | / | / | / |
| Comparative Example 5 | Na₄Fe₃(PO₄)₂P₂O₇/C | Aluminum foil | / | / | / | Aluminum foil | / | / | / |
| Comparative Example 6 | Na[Cu_{1/9}Ni_{2/9}Fe_{1/3}Mn_{1/3}]O₂ | Aluminum foil | / | / | / | Aluminum foil | / | / | / |
| Comparative Example 7 | ZrO₂-enveloped Na_{2/3}Ni_{1/6}Mn_{2/3}Cu_{1/9}Mg_{1/18}O₂ | Aluminum foil | / | / | / | Aluminum foil | / | / | / |
| Comparative Example 8 | Na₄Fe₃(PO₄)₂P₂O₇/C | Titanium foil | / | / | / | Titanium foil | / | / | / |
| Comparative Example 9 | Na[Cu_{1/9}Ni_{2/9}Fe_{1/3}Mn_{1/3}]O₂ | Titanium foil | / | / | / | Titanium foil | / | / | / |
| Comparative Example 10 | ZrO₂-enveloped Na_{2/3}Ni_{1/6}Mn_{2/3}Cu_{1/9}Mg_{1/18}O₂ | Titanium foil | / | / | / | Titanium foil | / | / | / |

**Table 2**

| No. | Chemical treatment solution | pH value | Chemical treatment temperature (°C) | Chemical treatment time (h) |
|---|---|---|---|---|
| Example 1 | / | | / | / |
| Example 2 | / | | / | / |
| Example 3 | / | | / | / |
| Example 4 | / | | / | / |
| Example 5 | / | | / | / |
| Example 6 | / | | / | / |
| Example 7 | / | | / | / |
| Example 8 | / | | / | / |
| Example 9 | / | | / | / |
| Example 10 | / | | / | / |
| Example 11 | / | | / | / |
| Example 12 | / | | / | / |
| Example 13 | / | | / | / |
| Example 14 | / | | / | / |
| Example 15 | / | | / | / |
| Example 16 | / | | / | / |
| Example 17 | / | | / | / |
| Example 18 | / | | / | / |
| Example 19 | / | | / | / |
| Example 20 | / | | / | / |
| Example 21 | / | | / | / |
| Example 22 | / | | / | / |
| Example 23 | / | | / | / |
| Example 24 | / | | / | / |
| Example 25 | / | | / | / |
| Example 26 | / | | / | / |
| Example 27 | / | | / | / |
| Example 28 | 2*10⁻²M NH₄OH | 11.8 | 60 | 8 |
| Example 29 | 1*10⁻²M NH₄OH | 11.5 | 60 | 8 |
| Example 30 | 5*10⁻³M NH₄OH | 11.1 | 60 | 8 |
| Example 31 | 5*10⁻³M NaOH | 11.7 | 60 | 8 |
| Example 32 | 1*10⁻²M NH₄OH | 11.5 | 60 | 8 |
| Example 33 | / | | / | / |
| Example 34 | / | | / | / |
| Example 35 | / | | / | / |
| Example 36 | / | | / | / |
| Comparative Example 1 | / | | / | / |
| Comparative Example 2 | / | | / | / |
| Comparative Example 3 | / | | / | / |
| Comparative Example 4 | / | | / | / |
| Comparative Example 5 | / | | / | / |
| Comparative Example 6 | / | | / | / |
| Comparative Example 7 | / | | / | / |
| Comparative Example 8 | / | | / | / |
| Comparative Example 9 | / | | / | / |
| Comparative Example 10 | / | | / | / |

**Table 3**

| No. | Positive electrode surface treatment layer | | Negative electrode surface treatment layer | | Positive electrode current | Negative electrode current | Battery | | | |
|---|---|---|---|---|---|---|---|---|---|---|
| | Thickness of surface treatment layer (nm) | Surface density of surface treatment layer (g/m²) | Thickness of surface treatment layer (nm) | Surface density of surface treatment layer (g/m²) | Conductivity (S/cm) | Conductivity (S/cm) | Nucleation overpotential (mV) | Average coulombic efficiency (%) | Number of cycles at capacity retention rate of 80% | Swelling rate in storage at 25°C (%) |
| Example 1 | 56 | 3.1 | / | / | 0.65 | 1.57 | 56 | 99.9 | 2300 | 13 |
| Example 2 | 32 | 1.7 | / | / | 0.89 | 1.57 | 56 | 99.9 | 2150 | 14 |
| Example 3 | 21 | 1.1 | / | / | 1.04 | 1.57 | 56 | 99.9 | 2650 | 11 |
| Example 4 | 8 | 0.3 | / | / | 1.35 | 1.57 | 56 | 99.5 | 2000 | 17 |
| Example 5 | 40 | 2.3 | / | / | 0.76 | 1.57 | 56 | 99.9 | 2350 | 12 |
| Example 6 | 34 | 1.9 | / | / | 0.86 | 1.57 | 56 | 99.8 | 2200 | 15 |
| Example 7 | 17 | 0.9 | / | / | 1.22 | 1.57 | 56 | 99.3 | 1850 | 18 |
| Example 8 | 21 | 1.1 | 21 | 1.1 | 1.04 | 1.04 | 19 | 99.9 | 2900 | 7 |
| Example 9 | 32 | 1.4 | / | / | 1.40 | 1.57 | 56 | 99.9 | 1800 | 19 |
| Example 10 | 20 | 0.8 | / | / | 1.52 | 1.57 | 56 | 99.7 | 2000 | 15 |
| Example 11 | 6 | 0.2 | / | / | 1.86 | 1.57 | 56 | 99.1 | 1500 | 20 |
| Example 12 | 14 | 0.5 | / | / | 1.68 | 1.57 | 56 | 99.4 | 1700 | 17 |
| Example 13 | 28 | 1.0 | / | / | 1.36 | 1.57 | 56 | 99.9 | 2350 | 11 |
| Example 14 | 33 | 1.3 | / | / | 1.24 | 1.57 | 56 | 99.9 | 2150 | 14 |
| Example 15 | 28 | 1.0 | / | / | 1.36 | 2.46 | 56 | 99.9 | 2200 | 14 |
| Example 16 | 28 | 1.0 | 28 | 1.0 | 1.36 | 1.36 | 35 | 99.9 | 2500 | 10 |
| Example 17 | 10 | 0.3 | / | / | 2.55 | 1.57 | 56 | 99.6 | 1800 | 16 |
| Example 18 | 17 | 0.5 | / | / | 2.38 | 1.57 | 56 | 99.9 | 2250 | 13 |
| Example 19 | 25 | 0.8 | / | / | 1.99 | 1.57 | 56 | 99.9 | 2000 | 15 |
| Example 20 | 17 | 0.5 | 17 | 0.5 | 2.38 | 2.38 | 15 | 99.9 | 2600 | 9 |
| Example 21 | 15 | 0.6 | / | / | 2.05 | 1.57 | 56 | 99.9 | 2650 | 8 |
| Example 22 | 15 | 0.6 | 15 | 0.6 | 2.05 | 1.57 | 8 | 99.9 | 2800 | 6 |
| Example 23 | / | / | 21 | 1.1 | 1.57 | 1.36 | 19 | 99.0 | 1700 | 18 |
| Example 24 | / | / | 30 | 1.7 | 1.57 | 1.79 | 16 | 99.0 | 1250 | 22 |
| Example 25 | / | / | 15 | 0.6 | 1.57 | 2.05 | 8 | 99.4 | 1900 | 14 |
| Example 26 | / | / | 30 | 1.7 | 1.36 | 1.79 | 16 | 99.9 | 1600 | 19 |
| Example 27 | 21 | 1.1 | 15 | 0.6 | 1.36 | 2.05 | 8 | 99.9 | 3200 | 6 |
| Example 28 | / | / | 975 | 5.2 | 1.57 | 2.13 | 14 | 99.6 | 1650 | 23 |
| Example 29 | / | / | 788 | 4.7 | 1.57 | 2.39 | 11 | 99.5 | 2000 | 19 |
| Example 30 | / | / | 532 | 3.4 | 1.57 | 2.57 | 12 | 99.3 | 1300 | 24 |
| Example 31 | / | / | 131 | 1.0 | 1.57 | 2.89 | 28 | 99.0 | 1100 | 25 |
| Example 32 | 21 | 1.1 | 788 | 4.7 | 1.36 | 2.39 | 11 | 99.9 | 2700 | 10 |
| Example 33 | 21 | 1.1 | 21 | 1.1 | 1.36 | 1.36 | 19 | 98.7 | 250 | 32 |
| Example 34 | 21 | 1.1 | 21 | 1.1 | 1.36 | 1.36 | 19 | 99.0 | 450 | 28 |
| Example 35 | 15 | 0.6 | 15 | 0.6 | 2.05 | 2.05 | 8 | 99.2 | 350 | 30 |
| Example 36 | 15 | 0.6 | 15 | 0.6 | 2.05 | 2.05 | 8 | 99.4 | 500 | 25 |
| Comparative Example 1 | / | / | / | / | 1.57 | 2.95 | 42 | 99.1 | 1150 | 24 |
| Comparative Example 2 | / | / | / | / | 2.46 | 2.95 | 42 | 99.2 | 1200 | 22 |
| Comparative Example 3 | / | / | / | / | 1.57 | 1.94 | 23 | 98.9 | 750 | 27 |
| Comparative Example 4 | / | / | / | / | 1.57 | 2.46 | 39 | 99.0 | 1000 | 25 |
| Comparative Example 5 | / | / | / | / | 1.57 | 1.57 | 56 | 99.0 | 1100 | 24 |
| Comparative Example 6 | / | / | / | / | 1.57 | 1.57 | 56 | 98.0 | 150 | 40 |
| Comparative Example 7 | / | / | / | / | 1.57 | 1.57 | 56 | 98.4 | 200 | 32 |
| Comparative Example 8 | / | / | / | / | 2.46 | 2.46 | 39 | 99.3 | 1050 | 22 |
| Comparative Example 9 | / | / | / | / | 2.46 | 2.46 | 39 | 98.2 | 200 | 37 |
| Comparative Example 10 | / | / | / | / | 2.46 | 2.46 | 39 | 98.5 | 250 | 30 |

It can be learned from the foregoing results that the current collectors of Examples each include a metal substrate and a surface treatment layer formed on at least one side of the metal substrate, where the surface treatment layer includes oxide and/or nitride of the metal substrate. Compared to Comparative Examples 1 to 10 in which the current collectors had no surface treatment layer, at least one side of the positive electrode current collector and/or the negative electrode current collector in this application has a surface treatment layer including oxide and/or nitride, and the surface treatment layer could effectively improve the coulombic efficiency and cycle capacity retention rate of the battery and enhance the storage performance of the battery without significantly reducing the conductivity of the current collector.

It can be learned from Examples 1 to 7, 9 to 15, 17 to 19, and 21 that using a current collector with a surface treatment layer as the positive electrode can significantly improve the cycling performance of the battery and reduce the swelling rate of the battery due to gassing in storage. The surface treatment layer of the positive electrode current collector may include one or more of aluminum oxide, titanium oxide, and titanium nitride, and the surface treatment layer has a thickness of 2 nm to 200 nm.

It can be learned from Examples 23 to 25 and 28 to 31 that using a current collector with a surface treatment layer as the negative electrode can reduce the nucleation overpotential of sodium ions deposited on the negative electrode, improve the cycling performance of the battery, and reduce the swelling rate of the battery due to gassing in storage. The surface treatment layer of the negative electrode current collector may include one or more of aluminum oxide, titanium oxide, titanium nitride, and nickel oxide, and the surface treatment layer has a thickness of 2 nm to 200 nm. The surface treatment layer of the negative electrode current collector may further include copper oxide nanoneedles, and the surface treatment layer has a thickness of 500 nm to 1000 nm.

Compared to aluminum foil alone, the nucleation overpotential of sodium ions in Example 8 in which the negative electrode current collector has a surface treatment layer containing aluminum oxide is reduced by over 60%. Compared to titanium foil alone, the nucleation overpotential of sodium ions in Examples 16 and 20 in which the negative electrode current collector has a titanium oxide surface treatment layer is reduced by over 30%. The nucleation overpotential of sodium ions in Example 20 in which the negative electrode current collector has a titanium nitride surface treatment layer is reduced by over 70%. The nucleation overpotential of sodium ions in Example 22 in which the negative electrode current collector has a surface treatment layer containing both titanium oxide and titanium nitride is reduced by over 85%. To be specific, the surface treatment layer with a heterogeneous structure of titanium oxide and titanium nitride is more conducive to deposition of sodium ions, which can further improve the cycling performance and storage performance of the battery.

It can be learned from Examples 8, 16, 20, 22, 26, 27, and 32 that using a current collector with a surface treatment layer as the positive electrode and a current collector with a surface treatment layer as the negative electrode together can have a synergistic effect, further improve the cycling performance of the battery, and reduce the swelling rate of the battery due to gassing in storage.

It can be learned from the comparison of Examples 30 and 31 that surface treatment performed on copper foil using aqueous ammonia is more effective in improving the cycling performance of the battery than using sodium hydroxide.

It can be learned from Examples 33 to 36 that this current collector is suitable for various positive electrode active materials and can improve the high-voltage cycling performance of layered metal oxides.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A current collector for sodium secondary battery, **characterized in that** the current collector comprises a metal substrate and a surface treatment layer formed on at least one side of the metal substrate, wherein the surface treatment layer comprises oxide and/or nitride of the metal substrate.

2. The current collector according to claim 1, **characterized in that** the surface treatment layer has a thickness of 2 nm to 200 nm, and optionally 5 nm to 50 nm.

3. The current collector according to claim 1 or 2, **characterized in that** the surface treatment layer comprises one or more of aluminum oxide, titanium oxide, copper oxide, nickel oxide, and titanium nitride.

4. The current collector according to any one of claims 1 to 3, **characterized in that** the surface treatment layer is obtained through heat treating performed on the metal substrate, and the metal substrate comprises at least one of aluminum, nickel, copper, and titanium.

5. The current collector according to claim 1, **characterized in that** the surface treatment layer has a thickness of 100 nm to 3000 nm, and optionally 500 nm to 1000 nm.

6. The current collector according to claim 5, **characterized in that** the surface treatment layer comprises copper oxide nanoneedles, wherein the copper oxide nanoneedles are substantially perpendicular to a surface of the metal substrate, and optionally, the nanoneedles have a length of 100 nm to 3000 nm, and the nanoneedles have a width of 30 nm to 200 nm.

7. The current collector according to claim 5 or 6, **characterized in that** the surface treatment layer is obtained through chemical treatment performed on the metal substrate, and the metal substrate comprises copper.

8. The current collector according to any one of claims 1 to 7, **characterized in that** the surface treatment layer has a surface density of 0.1 g/m² to 20 g/m².

9. The current collector according to any one of claims 1 to 8, **characterized in that** the metal substrate is in the form of a foil or foam, the foil metal substrate has a thickness of 5 µm to 500 µm, and optionally 10 µm to 80 µm, and the foam metal substrate has a porosity of higher than 90%.

10. The current collector according to any one of claims 1 to 9, **characterized in that** the current collector has a conductivity of not less than 0.1 S/cm.

11. A current collector preparation method, **characterized by** comprising the following steps: performing heat treatment and/or chemical treatment on a metal substrate to form a surface treatment layer on at least one side of the metal substrate, wherein the surface treatment layer comprises oxide and/or nitride of the metal substrate.

12. The preparation method according to claim 11, **characterized in that** the metal substrate is aluminum, the heat treatment is performed in an atmosphere of air or oxygen, the heat treatment is performed at 80°C to 350°C, and optionally 160°C to 280°C, the heat treatment is performed for 2 min to 120 min, and optionally 5 min to 30 min, and the surface treatment layer comprises aluminum oxide.

13. The preparation method according to claim 11, **characterized in that** the metal substrate is titanium, the heat treatment is performed in an atmosphere of air or oxygen, the heat treatment is performed at 200°C to 500°C, and optionally 300°C to 500°C, the heat treatment is performed for 2 min to 120 min, and optionally 5 min to 30 min, and the surface treatment layer comprises titanium oxide.

14. The preparation method according to claim 11, **characterized in that** the metal substrate is copper, the heat treatment is performed in an atmosphere of air or oxygen, the heat treatment is performed at 200°C to 500°C, and optionally 200°C to 400°C, the heat treatment is performed for 2 min to 120 min, and optionally 5 min to 30 min, and the surface treatment layer comprises copper oxide.

15. The preparation method according to claim 11, **characterized in that** the metal substrate is nickel, the heat treatment is performed in an atmosphere of air or oxygen, the heat treatment is performed at 80°C to 450°C, and optionally 180°C to 300°C, the heat treatment is performed for 2 min to 120 min, and optionally 5 min to 30 min, and the surface treatment layer comprises nickel oxide.

16. The preparation method according to claim 11, **characterized in that** the metal substrate is titanium, the heat treatment is performed in an atmosphere of nitrogen, a gas flow rate is 10 mL/min to 200 mL/min, and optionally 20 mL/min to 80 mL/min, the heat treatment is performed at 500°C to 800°C, and optionally 650°C to 800°C, the heat treatment is performed for 2 min to 120 min, and optionally 5 min to 30 min, and the surface treatment layer comprises titanium nitride.

17. The preparation method according to claim 11, **characterized in that** the preparation method is specifically:
after performing heat treatment on the metal substrate, performing post-treatment in a different atmosphere to form a surface treatment layer on at least one side of the metal substrate.

18. The preparation method according to claim 17, **characterized in that** the metal substrate is titanium, the heat treatment is performed in an atmosphere of air or oxygen, the heat treatment is performed at 200°C to 500°C, and the heat treatment is performed for 2 min to 120 min; the post-treatment is performed in an atmosphere of nitrogen, the post-treatment is performed at 600°C to 900°C, and the post-treatment time is performed for 2 min to 120 min; and the surface treatment layer comprises titanium oxide and titanium nitride.

19. The preparation method according to claim 11, **characterized in that** the preparation method is specifically:
preforming chemical treatment on the metal substrate in an alkaline solution to form a surface treatment layer on at least one side of the metal substrate.

20. The preparation method according to claim 19, **characterized in that** the metal substrate is copper, the alkaline solution has a pH value of 11 to 12, the chemical treatment is performed at 45°C to 90°C, and the chemical treatment is performed for 0.5 h to 12 h.

21. A secondary battery, **characterized by** comprising a positive electrode plate and a negative electrode plate, wherein the positive electrode plate and/or the negative electrode plate comprises the current collector according to any one of claims 1 to 10, or a current collector prepared using the preparation method according to any one of claims 11 to 20.

22. The secondary battery according to claim 21, **characterized in that** the secondary battery is a sodium battery.

23. The secondary battery according to claim 21 or 22, **characterized in that** the secondary battery is a sodium secondary battery with no negative electrode.

24. The secondary battery according to any one of claims 21 to 23, **characterized in that** the positive electrode plate comprises a positive electrode active material, wherein the positive electrode active material comprises one or more of Prussian blue compound, polyanionic compound, and layered oxide.

25. The secondary battery according to claim 24, **characterized in that** a surface of particles of the positive electrode active material is provided with an enveloping layer, wherein the enveloping layer comprises one or more of carbon material, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride.

26. The secondary battery according to claim 25, **characterized in that** the enveloping layer has a thickness of 2 nm to 1000 nm.

27. An electric apparatus, **characterized by** comprising the secondary battery according to any one of claims 21 to 26.
